# EUROPEAN PATENT APPLICATION

(11) **EP 2 132 985 A1**
(43) Date of publication of application: **16.12.2009**
(21) Application number: 08104414.1
(22) Date of filing: 13.06.2008
(51) Int. Cl.: A01M 1/14, A01M 1/16, A01M 1/20

(54) **Insect control product**

(71) Applicant: Jeyes Deutschland GmbH, 86633 Neuburg (DE)
(72) Inventor: Halbritter, Ingrid Jeyes Deutschland GmbH, 86633 Neuburg/Donau (DE)
(74) Representative: Lampe, Sigmar

(57) **Abstract**

The invention relates to an insect control product (1) comprising a flexible sheet-like substrate (2). A first coating (3) is applied on a first side of the flexible substrate (2). The first coating (3) comprises a bait formulation and/or an insecticide formulation.

## Description

The present invention relates to a product for controlling insects. More particularly, the invention relates to an insect controlling product comprising a bait formulation and/or an insecticide formulation.

Flytraps are known in which the trap consists of a transparent sheet having two adhesive surfaces. A first adhesive surface is foreseen for adhering to the windowpane and a second adhesive surface on the reverse side of the sheet is provided for trapping flies. Prior to use non-stick paper protects both adhesive surfaces.

For a typical application of this transparent adhesive flytrap, the non-stick paper is removed from the first adhesive surface and the flytrap is then fixed to a windowpane. Once the device has been safely placed on the windowpane, the non-stick paper is removed from the second adhesive surface, exposing the sticky surface for catching flies. In other instances, it may be preferred to remove the non-stick paper from the fly-trapping adhesive first, because it has the stronger sticking properties.

The size of these sheets, and the handling of the substantial adhesive surface area when positioning the device on a windowpane after having exposed the first adhesive surface by removing the non-stick paper make the handling thereof quite cumbersome. While the contact of the first or second adhesive surface with the user's fingers and hands should be reduced, it can almost not be completely avoided. This is a particular shortcoming when additional insecticides are used as agents on the second, fly-catching surface.

It is therefore an object of the present invention, to provide a device for controlling insects, which overcomes the above disadvantages.

According to a first aspect of the present invention, an insect control product comprises a flexible sheet-like substrate. A first coating is applied on a first side of the flexible substrate. The first coating further comprises a bait formulation and/or an insecticide formulation. The flexible substrate is in the form of an elongated strip.

In a first configuration of the above aspect, the first coating may comprise a glue adapted for trapping insects.

In a further configuration, the glue may be selected strong enough to maintain the trapped insects stuck until they die.

A third configuration of the first aspect may comprise a removable non-stick strip on the first coating.

In another configuration the second side of the flexible substrate may be adhesive.

In a further configuration, the second coating may comprise a non-permanent or removable glue.

In yet another configuration of the first aspect, the second side of the substrate may provide a static adhesion surface.

According to a further configuration, a static adhesion coating may be provided on the second side of the substrate.

In yet another configuration of the first aspect, the first side of the flexible substrate is non-adhesive, whereas the first coating is adhesive. The first coating is applied onto the non-adhesive first side of the flexible substrate, such that upon contact with a substantially smooth surface of an object the first coating adheres thereto and separates from the non-adhesive first side of the substrate.

Another configuration may comprise separation means such that the first coating adheres stronger to the first side of the substrate and adheres less to the second side.

In a further configuration the bait formulation may comprise pheromones. Alternatively, if provided, the glue may comprise pheromones.

In yet another configuration the pheromones may be specific for the targeted species of insects, such as e.g. flies or moths, or crawling insects, such as e.g. cockroaches or silverfish.

In a configuration of the first aspect the bait formulation may be particularly attractive for the targeted insects. It may further comprise an agent suitable for killing the insects aimed at, e.g. azamethiphos, imidacloprid, acetamiprid, propoxur, combinations of different pyrethroids or other agents.

According to a second aspect of the present invention, an applicator device comprises the product according to the first aspect of the invention, and further comprises at least one coil for storing the wound-up product prior to use.

According to a configuration of the second aspect, the applicator device may be a single use device or a refill cartridge for a reusable device.

The insect control product according to the present invention may be used in existing tape rollers, such as correction tape rollers or adhesive tape rollers. This may facilitate simple and safe application of the product. Moreover, it may enable existing tape rollers to be used for a new field of application, i.e. insect control.

These and other aspects of the invention will now be further described, by way of example only, with reference to the accompanying figures in which
Fig. 1 shows a cross section of an insect control product according to the present invention;
Fig. 2 illustrates a cross section of a first embodiment of an insect control product according to the present invention;
Fig. 3 depicts a cross section of a second embodiment of an insect control product according to the present invention;
Fig. 4a shows a cross section of an applicator device for an insect control product according to a first embodiment of the present invention.
Fig. 4b shows a cross section of an applicator device for an insect control product according to a second embodiment of the present invention.

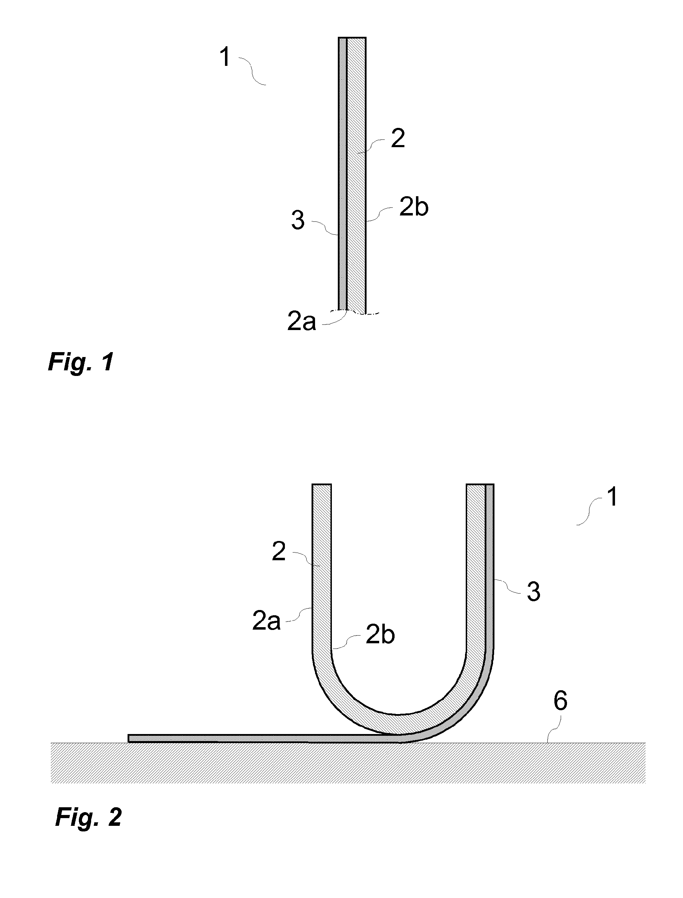

A general representation of a cross section of an insect control product in accordance with the present invention is shown in Fig. 1. The insect control product 1 comprises a flexible, sheet-like substrate 2 with two sides 2a, 2b. A first coating 3 is applied on the first side 2a of the flexible substrate. The first coating 3 comprises a bait formulation and/or an insecticide formulation, but may not necessarily need to comprise a glue. The flexible substrate 2 on which the first coating 3 is provided, and thus the entire insect control product 1, is in the form of an elongated strip.

It is advantageous that the elongated strip can be wound onto a coil, not shown in Fig. 1, for storing the product 1 prior to use, which facilitates handling of the product 1 during its application. The product 1 wound on a coil may thus be easily applied to substantially smooth surface of an object, such as windowpanes, not shown in Fig. 1. The coil safely stores unused product and protects it from the environment. At the same time, the product 1 may easily be applied simply by rolling and pressing the strip onto the target surface.

Moreover, it may be preferred that the first coating 3 further comprises an adhesive or glue adapted for trapping insects.

These embodiments will now be described in more detail.

Fig. 2 illustrates a cross section of a first embodiment of an insect control product 1 according to the present invention. The product 1 is based on a single insect control coating. This coating 3 originally provided on substrate 2 is transferred from the first surface 2a of the substrate 2 to the surface 6 of a windowpane, and the substrate 2 is subsequently removed. The insect controlling coating 3 is thus directly applied on the windowpane and is exposed to the targeted insects.

The first coating 3 comprises a bait and/or insecticide formulation. Examples of suitable bait or insecticide are given below. Moreover, the first coating 3 may comprise an adhesive or glue, as also described below.

Advantageously, at least the first side 2a, but preferably also the second side 2b, of the flexible substrate 2 are provided with a non-stick surface. Either the substrate 2 itself may be produced from non-stick material, such as e.g. silicon paper, or a non-stick coating may have been applied to at least the first side 2a of the substrate 2.

It may be advantageous to select the non-stick properties of each side of the substrate such that the coating 3 adheres stronger to the first side 2a of the substrate 2 it has been applied to, but adheres less to the other, second side 2b of the substrate 2. The difference in adherence on both sides of the substrate 2 enables the product strip windings to separate the top surface of coating 3 from the underside 2b of the substrate 2 when rolling the product 1 off a coil for application.

For producing the insect control product 1, the coating 3 is applied onto the non-stick coating on the first side 2a of the flexible substrate 2, such that upon contact with a substantially smooth surface 6 of an object, the first coating 3 lifts off from substrate 2 and is easily transferred to the surface 6 of the object, to which it adheres as a film.

If the second side 2b of the substrate 2 does not have non-stick properties, it is advantageous to apply a non-stick strip (not shown in Fig. 2) on top of first coating 3, protecting it from contact with other layers of the product 1 when rolled up into a coil.

As mentioned above, the coating 3 may comprise an adhesive or glue. Any extremity of an insect, such as a fly, coming into contact with the first coating, will therefore remain stuck. With the insect controlling coating 3 directly applied on the windowpane, the flies thus stick directly on the pane. Preferably, a high-quality adhesive is used, which allows to be removed in one go, including any dead insects. It may be preferred to choose a non-permanent or removable glue which may be washed off the object's surface 6, or may allow to removed by lifting off the entire strip of the first coating 3 applied to the object, together with any trapped insects.

It may be advantageous to choose a coating 3 comprising a bait formulation, in order to lure the targets insects towards the first coating 3 comprising the adhesive or glue.

Alternatively, the coating 3 may comprise a bait and insecticide formulation, but no additional adhesive or glue. With the insect controlling coating 3 directly applied on the surface 6 of a windowpane, the bait and insecticide formulation is thus directly on the pane and may be eaten off by the insects or is eventually washed off by the user with the next window cleaning. Without adhesive or glue, the insects will not necessarily stick to the surface 6 of the object until they die. The bait and insecticide formulation is selected such that it adheres by itself to the target surface, such as a windowpane. Insects consume the bait and insecticide formulation and are subsequently killed. The bait formulation/insecticide formulation directly applied to the pane 6 may either be eaten off by the insects, or may be washed off by the user with the next window cleaning without leaving traces of glue.

Of course, for even better results, the coating 3 may comprise a combination of both, adhesive or glue, and bait and insecticide formulation.

In a second embodiment, the coating 3 comprising the bait and/or insecticide formulation is again provided on the first side 2a of the substrate 2. However, second side 2b of the substrate 2 has adhesive properties, e.g. by applying a further coating 4 comprising an adhesive to the second side 2b of the substrate 2. For application, the substrate 2 carrying coating 3 is attached to the pane 6 by means of the adhesive coating 4. The coating 3 comprising the bait and/or insecticide formulation on the other, first surface 2a of the substrate 2 is thus exposed to the targeted insects.

The first coating 3 on the exposed first side 2a of the substrate may further comprise an adhesive or glue on the free surface to provide a sticking surface for any insects.

Alternatively, the adhesive properties of substrate side 2b, may be achieved by a static adhesion surface. The static adhesion may e.g. be obtained by selecting the substrate 2 from electrostatic material (such as plasticised polyvinylchloride or polyethylene) in which case no further coating 4 may be necessary in order to achieve the static adhesion. It may, however, be preferred to provide a static adhesion coating 4 on the side 2b of the substrate 2.

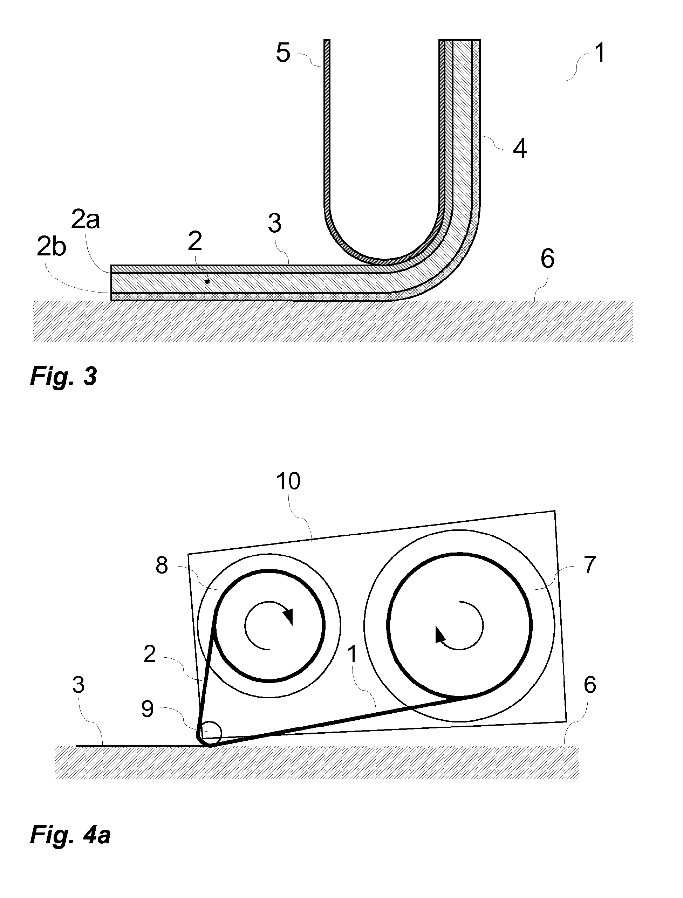

A separator strip 5 may cover the free surface of the coating 3, enabling the product to be rolled up in a coil, e.g. in an applicator device. Referring to Fig. 3, a removable non-stick strip 5 is provided on the first coating 3. The non-stick strip 5 covers and protects the first coating 3 prior to use. When applying the product 1, the non-stick strip 5 is removed, thus exposing the first coating 3.

The product strip can easily be removed from the surface 6 of the object by pulling off the substrate 2. The further coating 4 may be a non-permanent or removable glue which allows the entire strip to be removed by lift-off.

Preferably, the flexible substrate 2 will be selected from clear and transparent material, but it is of course possible to choose coloured, or partly or completely opaque material in accordance with the intended placement. For example transparent or partly transparent substrate material may be preferred for placement on windowpanes.

As mentioned above, the coating 3 may comprise an adhesive or glue. Any extremity of an insect, such as a fly, coming into contact with the first coating, will therefore remain stuck. With the insect controlling coating 3 directly applied on the substrate 2, which is fixed to the windowpane, the flies thus stick directly on the substrate 2.

Preferably, a high-quality adhesive is used, which allows to be removed in one go, including any dead insects. It may be preferred to choose a non-permanent or removable glue which may be washed off the object's surface 6, or may allow to removed by lifting off the entire strip of the first coating 3 applied to the object, together with any trapped insects.

It may be advantageous to choose a coating 3 comprising a bait formulation, in order to lure the targets insects towards the first coating 3 comprising the adhesive or glue.

Alternatively, the coating 3 may comprise a bait and insecticide formulation, but no additional adhesive or glue. With the insect controlling coating 3 directly applied on the substrate 2, the bait and insecticide formulation is thus directly on the substrate 2 and may be eaten off by the insects. Without adhesive or glue, the insects will not necessarily stick to the substrate 2 until they die. The bait and insecticide formulation is selected such that it adheres by itself to the substrate 2. Insects consume the bait and insecticide formulation and are subsequently killed.

Of course, for even better results, the coating 3 may comprise a combination of both, adhesive or glue, as well as bait and insecticide formulation.

If an adhesive is used for further coating 4, the adhesive is preferably selected from non-permanent high quality adhesive that allows the substrate 2 to be removed from the surface 6 in one go. Alternatively or additionally it may be preferred that the adhesive used in further coating 4 does not leave traces on surface 6 when removing the substrate 2.

In an embodiment not shown in the Figures, the insect control product according to the present invention may be in the shape of a coil from which a length of the product may be rolled off and applied to an object's surface. The length of applied strip may be separated from the remainder of unused product on the coil by cutting off a predetermined length before application. Alternatively, the strip may be applied to the surface of an object prior to separating it from the remainder of unused product on the coil. Finally, if foreseen, a separator strip protecting the insect control coating is removed, thus exposing the insect control coating to the targeted insects.

As shown in Fig. 4a, an applicator device 10 for the insect control product 1 according to the present invention comprises at least one coil 7 for storing the wound-up product 1 prior to use. In known manner the product 1 is rolled off coil 7 and is pressed onto an object's surface 6 by roll 9. The adhesive first coating 3 adheres to surface 6. Substrate 2, provided with a non-adhesive surface, then separates from first coating 3 and is fed to take-up coil 8.

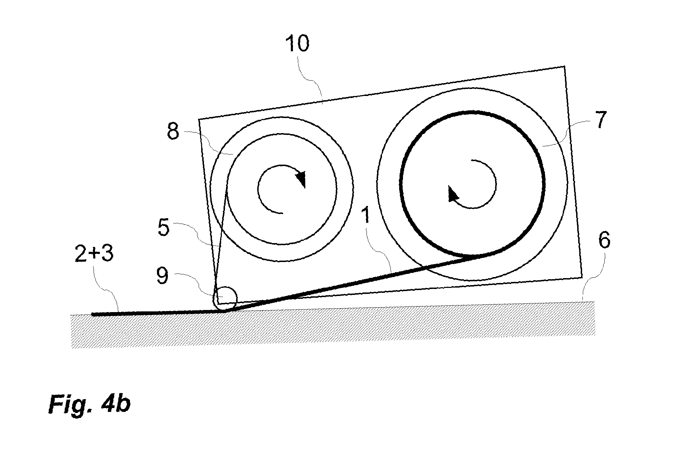

Fig. 4b shows an applicator device 10 for the insect control product 1 according to the second embodiment of the present invention. Applicator 10 comprises at least one coil 7 for storing the wound-up product 1 prior to use. In known manner the product 1 is rolled off coil 7 and is pressed onto an object's surface 6 by roll 9. When applying product 1, the second coating 4 adheres to surface 6, attaching substrate 2 together with the first coating 3 to the object. While applying product 1 to surface 6, non-stick strip 5 is taken up by take-up coil 8.

The applicator device may be a single-use device or a refill cartridge for a multiple use device.

In case the coating 3 does not comprise a bait formulation, the insecticide formulation may comprise pheromones. If a bait is used in coating 3, the formulation is preferred to be without pheromones.

If pheromones are used, they are advantageously chosen specific for the different species of insects, e.g. flies, moths, etc. They may also be chosen for use against crawling insects, such as e.g. cockroaches or silverfish.

Advantageously, the adhesive used in the insect control product according to the present invention is chosen strong enough to maintain the trapped insects stuck until they die.

The bait formulation may be particularly attractive for the insects aimed, and may further comprise an agent suitable for killing the insects aimed at, e.g. azamethiphos, imidacloprid, acetamiprid, propoxur, or combinations of different pyrethroids or other agents. This list is non-exclusive.

The insect control product 1 according of the present invention may be provided as a single-use roller or multiple-use roller with refill cartridges, similar to correction tape rollers. Advantageously, the width/length ratio of product 1 is approximately 1:600 or less. It is preferred that the width/length ratio is between approximately 1:690 and 1:4250. More advantageously, the length of the product strip 1 is of the order of approximately 5, 6, 8.5, 9, 10, 14 or 17.7 metres, with a preferred width selected between about 4.2, 5, 6, 8.4, or 25.4 millimetres. While these particular width/length combinations enable the insect control product according to the present invention to be used in conjunction with conventional tape rollers and their respective refill cartridges, it is understood that other width/length combinations may be chosen freely for product 1 without changing the underlying principle of the present invention.

The invention provides for application of the insect control product as a roll-off adhesive and/or roll-off bait and/or insecticide formulation.

The application of the coating is facilitated by rolling-off the product from a coil.

The adhesive or bait formulation may be provided on a substrate strip or applied directly to the windowpane.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. An insect control product (1) comprising
a flexible sheet-like substrate (2);
a first coating (3) applied on a first side (2a) of the flexible substrate (2);
wherein the first coating (3) comprises a bait formulation and/or an insecticide formulation; and
**characterised in that**
the flexible substrate (2) is in the form of an elongated strip.

2. The product according to claim 1, wherein the first coating (3) further comprises a glue adapted for trapping insects.

3. The product according to claim 2, wherein the glue is selected strong enough to maintain the trapped insects stuck until they die.

4. The product according to any one of the preceding claims, further comprising a removable non-stick strip (5) on the first coating (3).

5. The product according to any one of the preceding claims, wherein the second side (2b) of the substrate (2) is adhesive.

6. The product according to claim 5, wherein a second coating (4) comprising a non-permanent or removable glue is applied to the second side (2b) of the substrate (2).

7. The product according to claim 5, wherein the second side (2b) of the substrate (2) provides a static adhesion surface.

8. The product according to claim 7, wherein a static adhesion coating (4) is provided on the second side (2b) of the substrate (2).

9. The product according to any one of claims 1 to 4, wherein the first side (2a) of the flexible substrate (2) is non-adhesive, the first coating (3) is adhesive, and wherein the first coating (3) is applied onto the non-adhesive side first (2a) of the flexible substrate (2), such that upon contact with a surface (6) of an object the first coating (3) adheres thereto and separates from the non-adhesive first side (2a) of the substrate (2).

10. The product according to claim 9, further comprising separation means such that the first coating (3) adheres stronger to the first side (2a) of the substrate and adheres less to the second side (2b).

11. The product according to any one of the preceding claims, wherein the bait formulation comprises pheromones.

12. The product according to claim 11, wherein the pheromones are specific for the targeted species of insects, such as e.g. flies or moths, or crawling insects, such as e.g. cockroaches or silverfish.

13. The product according to any one of the preceding claims, wherein the bait formulation is particularly attractive for the insects aimed, and further comprises an agent suitable for killing the insects aimed at, e.g. azamethiphos, imidacloprid, acetamiprid, propoxur, combinations of different pyrethroids or other agents.

14. An applicator device (10) comprising the product (1) according to any one of the preceding claims, and further comprising at least one coil for storing the wound-up product (1) prior to use.

15. The applicator device according to claim 14, wherein the applicator device (10) is a single use device or a refill cartridge for a reusable device.
